# DEMANDE DE BREVET EUROPEEN

(11) **EP 4 012 559 A1**
(43) Date de publication de la demande: **15.06.2022**
(21) Numéro de dépôt: 21213888.7
(22) Date de dépôt: 10.12.2021
(51) Int. Cl.: G06F 9/451, G06F 3/14

(54) **PROCÉDÉ DE PRODUCTION DE DONNÉES D AFFICHAGE AU NIVEAU D'UN TERMINAL D'UNE MACHINE VIRTUELLE HÉBERGÉE SUR UN SERVEUR D'UN ORDINATEUR HÔTE**

(30) Priorité: 11.12.2020 FR 2013103
(71) Demandeur: Blade, 75002 Paris (FR)
(72) Inventeur: GELLY, Grégory, 75013 PARIS (FR)
(74) Mandataire: IP Trust

(57) **Abrégé**

Procédé pour faire afficher par un client (4) des données d'affichage client générées à partir de données d'affichage produites par une machine virtuelle (3) distante du client et associée au client s'exécutant sur un ordinateur hôte (1), comportant les étapes suivantes : au niveau de la machine virtuelle : détection par un module de traitement d'image (204) de données d'affichage statique au sein des données d'affichage, et génération de données d'affichage dynamique à partir des données d'affichage par suppression des données d'affichage statique, génération par un module de traitement de données (206) de données de commande d'affichage à partir des données d'affichage statique détectées, et transmission par un module de transmission (208) de données de sessions comportant les données d'affichage dynamique et les données de commande d'affichage; au niveau du client distant : réception par un module de réception (302) des données de sessions transmises, génération par un module de traitement (304) de données d'affichage client statique à partir des données de commande d'affichage présentes dans les données de session reçues, génération par un module de traitement d'image (306) des données d'affichage client à partir des données d'affichage dynamique présentes dans les données de session reçues et des données d'affichage client statique.

## Description

### Domaine technique

La présente invention concerne un procédé et un dispositif pour faire afficher par un client distant des données d'affichage client générées à partir de données d'affichage produites par une machine virtuelle associée au client distant s'exécutant sur un ordinateur hôte.

### Arrière-plan technologique

Les documents US2017228851 et FR3047576 décrivent une configuration de système informatique, dans lequel des dispositifs d'interface d'utilisateur (affichage, clavier...) sont séparés de la partie traitement de l'application. Les dispositifs d'interface utilisateur (également dénommé collectivement comme le «client») se trouvent à proximité de l'utilisateur alors que les composants de traitement et de stockage formant un ordinateur hôte se trouvent dans un lieu d'hébergement distant. Les dispositifs d'interface utilisateur ont généralement accès, au niveau de l'ordinateur hôte, à une machine virtuelle dédiée par l'intermédiaire d'un réseau (le plus souvent Internet), la machine virtuelle émulant le traitement, le stockage et toutes les autres ressources informatiques requises pour que l'utilisateur puisse exploiter une session informatique, comme si celle-ci s'exécutait localement. L'ordinateur hôte héberge le système d'exploitation et les applications logicielles utilisées par les clients, ce qui limite les ressources de traitement du côté client.

Il est habituel que l'ordinateur hôte soit constitué d'une pluralité de systèmes informatiques physiques (serveurs), chacun hébergeant une pluralité de machines virtuelles. Chaque machine virtuelle est connectée à un client, et fournit un environnement virtuel dédié pour émuler les fonctions d'un ordinateur personnel physique, y compris le traitement des données graphiques, et fournir les images de session d'utilisateur sur l'écran du client. Ces images de session sont préparées et traitées au moyen d'une carte graphique, pouvant être physique ou virtuelle, qui est attribuée à la machine virtuelle au moment du démarrage de celle-ci. De la même manière, les données de son produites au cours de l'exécution de la session d'utilisateur sont transférées au client.

Le client possède des ressources informatiques suffisantes pour recevoir le flux de données et afficher et/ou émettre celles-ci. Le client échange également des informations ou des instructions avec la machine virtuelle, telles que celles générées par les dispositifs d'interface (clavier, souris...). Ces informations sont appelées données de commande. Les images de session étant destinées à être diffusées au client distant, les serveurs sur lesquels s'exécutent les machines virtuelles hébergeant ces sessions ne sont généralement pas reliés à des écrans.

Il arrive que des éléments de l'interface utilisateur soient reçus par l'écran du client avec une qualité très dégradée. C'est par exemple le cas avec certains éléments statiques, comme du texte, des menus, icônes ou motifs fins de l'interface utilisateur. La qualité dégradée peut résulter de l'encodage des images pour limiter l'utilisation de la bande passante.

La présente invention vise à pallier ces difficultés.

### Exposé de l'invention

Selon un premier aspect de l'invention, il est proposé un procédé pour faire afficher des données d'affichage client par un client distant, les données d'affichage client étant générées à partir de données d'affichage produites par une machine virtuelle associée au client distant s'exécutant sur un ordinateur hôte.

Au niveau de la machine virtuelle, le procédé comporte la mise en œuvre des étapes suivantes :
- détection par un module de traitement d'image de données d'affichage statique au sein des données d'affichage, et génération de données d'affichage dynamique à partir des données d'affichage par suppression des données d'affichage statique,
- production par un module de traitement de données de données de commande d'affichage à partir des données d'affichage statique détectées, et
- transmission par un module de transmission de données de sessions comportant les données d'affichage dynamique et les données de commande d'affichage,

Au niveau du client distant, le procédé comporte la mise en œuvre des étapes suivantes :
- réception par un module de réception des données de sessions transmises,
- génération par un module de traitement d'image de données pour affichage par le client à partir des données de sessions reçues, les données préparées à partir des données d'affichage dynamique et de données d'affichage client statique générées à partir des données de commande d'affichage.

On appelle données statiques d'affichage statique des données d'affichage qui n'évolue pas au cours d'une période prédéterminée, ou encore des données d'affichage que le client distant peut afficher sans qu'il soit besoin de les diffuser au client distant, par exemple car le client en dispose dans une unité de stockage.

Ainsi, l'invention prévoit de séparer l'affichage en deux parties, l'une dynamique qui est diffusée comme usuellement, et un partie statique dont l'affichage est généré au niveau du client.

En opérant ainsi, on évite une opération de diffusion d'un encodage d'une partie d'image correspondant à du texte, et on préfère adresser le texte pour affichage au moyen de données de commandes d'affichage, l'affichage du texte étant réalisé au niveau du client distant. Le texte n'est alors plus dégradé et de la bande passante et des capacités de calcul sont économisées.

De préférence, le traitement des données présentes dans les données de session reçues commande l'affichage d'images enregistrées dans une unité de stockage du client distant.

Selon un deuxième aspect de l'invention, il est proposé un dispositif pour faire afficher par un client distant des données d'affichage client générées à partir de données d'affichage produites par une machine virtuelle associée audit client distant prévue pour être exécutée sur un ordinateur hôte.

Au niveau de la machine virtuelle, le dispositif comporte :
- un module de traitement d'image configuré pour détecter des données d'affichage statique au sein des données d'affichage produites par ladite machine virtuelle, et générer des données d'affichage dynamique à partir des données d'affichage par suppression des données d'affichage statique,
- un module de traitement de données configuré pour générer des données de commande d'affichage à partir des données d'affichage statique détectées, et
- un module de transmission configuré pour transmettre des données de sessions comportant les données d'affichage dynamique et les données de commande d'affichage,

Au niveau du client distant, le dispositif comporte :
- un module de réception configuré pour recevoir les données de sessions transmises,
- un module de traitement configuré pour générer des données d'affichage client statique à partir des données de commande d'affichage présentes dans les données de session reçues,
- un module de traitement d'image configuré pour générer lesdites données d'affichage client pour affichage par le client à partir des données d'affichage dynamique présentes dans les données de session reçues et des données d'affichage client statique.

### Brève description des figures

D'autres caractéristiques et avantages de l'invention ressortiront de la description détaillée de l'invention qui va suivre en référence aux figures annexées sur lesquels :
[Fig. 1] La figure 1 représente schématiquement une architecture informatique dans laquelle peut être mise en œuvre la présente invention,
[Fig. 2] La figure 2 représente schématiquement un premier mode de réalisation d'un dispositif selon l'invention,
[Fig. 3] La figure 3 représente schématiquement un deuxième mode de réalisation d'un dispositif selon l'invention.

### Description détaillée de l'invention

Les modes de réalisation décrits ci-après n'étant nullement limitatifs, on pourra notamment considérer des variantes de l'invention ne comprenant qu'une sélection de caractéristiques décrites, par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

Sur les figures un élément apparaissant sur plusieurs figures conserve la même référence.

Dans la description qui suit, des descriptions détaillées de fonctions et d'éléments connus, qui pourraient inutilement rendre obscur l'essentiel de la présente invention, seront omises.

### Architecture informatique

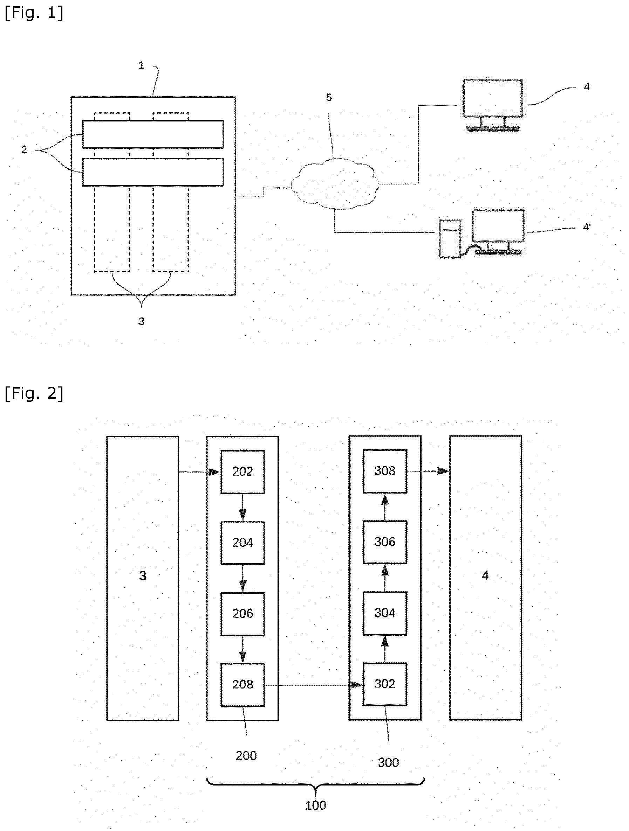

Figure 1 représente une architecture informatique permettant de mettre en œuvre le procédé de maintenance qui fera l'objet d'une description détaillée dans la suite de cette description.

Cette architecture est formée ici d'un ordinateur hôte 1 qui présente une pluralité de serveurs 2. Les serveurs 2 sont constitués de composants performants (CPU, mémoire, disque de stockage, cartes graphiques et de réseau) de manière à former une plateforme matérielle particulièrement efficace pour exécuter des applications pouvant nécessiter des capacités de traitement importantes, telles que les jeux vidéo.

Comme cela est bien connu, les serveurs 2 peuvent être configurés pour héberger une ou plusieurs machine(s) virtuelle(s) 3, en même temps que son/leur système d'exploitation et ses/leurs applications. La virtualisation permet qu'une pluralité de machines virtuelles 3 soit hébergée dans chaque serveur 2 pour fournir une pluralité d'environnements virtuels totalement isolés les uns des autres. Chaque environnement virtuel a accès aux ressources matérielles du serveur (CPU, mémoire, moyens de stockage, carte graphique...) permettant d'y exécuter une session informatique d'utilisateur. On peut citer, parmi les technologies de virtualisation bien connues, Citrix XenServer, Microsoft Hyper-V, VMware ESXi, Oracle Virtual box, Quick Emulator sous licence ouverte GNU (QEMU), etc.

Chacune des machines virtuelles 3 dans l'ordinateur hôte 1 peut être dédiée à un utilisateur spécifique. Les utilisateurs interagissent avec leurs machines virtuelles 3 dédiées depuis des clients distants 4, 4', chacun étant connecté à l'ordinateur hôte 1 par l'intermédiaire d'un réseau 5 comme le réseau Internet. Étant donné que la plus grande partie, si ce n'est l'intégralité, du traitement se fait au niveau de l'ordinateur hôte 1, les clients distants 4, 4' peuvent rester très simples, et peuvent inclure, par exemple, un simple terminal, un connecteur de réseau et des dispositifs d'entrée/sortie de base (clavier, souris...) comme représenté par le client distant 4 sur la figure 1. Le client distant 4 peut être formé d'un dispositif informatique simplifié, tel qu'une tablette, un smartphone. Selon une autre solution, il peut s'agir d'un ordinateur personnel standard, disposant de sa propre unité centrale, d'une carte graphique, de périphériques... comme représenté par le client distant 4'.

Chaque serveur 2 de l'ordinateur hôte 1 héberge, de préférence, moins de dix machines virtuelles 3 pour fournir des ressources informatiques suffisantes, notamment matérielles, à chaque machine virtuelle 3 pour exécuter des applications hautes performances avec un niveau suffisant de service. Chaque machine virtuelle 3 est créée au moment de la connexion du client à l'ordinateur hôte 1 et comprend une unité centrale virtuelle, une mémoire principale virtuelle, ainsi que toutes les autres ressources nécessaires.

La machine virtuelle 3 comporte notamment, ou a accès à, une unité de traitement graphique pour préparer des données d'affichage de la session. Cette unité de traitement graphique peut correspondre à une simple carte vidéo matérielle ou à une carte graphique matérielle associée à la machine virtuelle 3. Il peut s'agir également d'une carte vidéo virtuelle ou d'une carte graphique virtuelle entièrement émulée par les ressources matérielles du serveur 2 (et notamment par son ou ses unité(s) de traitement et/ou sa ou ses carte(s) graphique(s), ces ressources étant mises à disposition de la machine virtuelle 3 par la couche logicielle de virtualisation (l'hyperviseur) s'exécutant sur le serveur 2. Cette unité de traitement graphique peut également mixer des éléments matériels et des éléments virtuels.

Quelle qu'en soit la nature, matérielle ou virtuelle, l'unité de traitement graphique associée à la machine virtuelle a pour fonction de préparer et fournir les données d'affichage de la session informatique s'exécutant dans la machine virtuelle 3.

La session informatique d'utilisateur s'exécute sur l'ordinateur hôte 1 et exploite les capacités de traitement d'une unité de traitement graphique qui prépare les données d'affichage de la session. Ces données d'affichage sont fournies répétitivement par l'unité de traitement graphique, dans une mémoire tampon de cette unité ou associée à cette unité. Les données d'affichage peuvent, par exemple, être préparées et fournies toutes les 4 à 35 millisecondes par l'unité de traitement graphique.

Chaque machine virtuelle 3 émule un ordinateur personnel virtuel hautes performances qui est associé et commandé par un client distant 4, 4'. Chaque machine virtuelle 3 constitue donc, ou est l'équivalent, d'une session d'utilisateur, et un grand nombre de ces sessions d'utilisateur peuvent être exécutées sur les serveurs 2 de l'ordinateur hôte 1. L'architecture informatique peut comprendre une pluralité d'ordinateurs hôtes 1, reliés entre eux et qui peuvent se trouver dans des centres de données informatiques géographiquement séparés.

Chaque session d'utilisateur est associée à un client distant 4, 4'. Pour afficher les images de la session d'utilisateur sur le terminal du client distant 4, 4' qui lui est associé, l'ordinateur hôte 1 fournit le client distant 4, 4' en informations d'affichage (y compris en sons) et en informations de commande pour les dispositifs d'entrée/sortie installés sur le site distant.

À l'inverse, les clients distants 4, 4' fournit l'ordinateur hôte 1 en informations de commande en provenance des dispositifs d'entrée/sortie qui se trouvent sur le site distant (clavier, souris), et éventuellement d'autres formes de données telles que des informations d'affichage et sonores fournies par un dispositif USB ou intégrées dans une caméra et un microphone du client distant 4, 4', ou des périphériques de réseau, au niveau du client distant 4, 4', tels des imprimantes...

On désignera dans la présente description par « informations de session» toutes les informations échangées entre le client distant 4, 4' et l'ordinateur hôte 1.

Du côté de l'ordinateur hôte 1, un programme de capture et de diffusion des informations de session s'exécute, en tâche de fond, dans chaque session informatique. Le programme de capture et de diffusion met en œuvre des opérations visant à collecter les données d'affichage, de son et de commande préparées par la session informatique, d'encoder ces données pour limiter l'utilisation de la bande passante du réseau et de les transmettre au client distant 4, 4'. Le programme de capture et de diffusion reçoit et décode également les données de commande communiquées par le client distant 4, 4', les exploite ou les fournit à la session d'utilisateur pour qu'elles soient traitées et exploitées de manière conventionnelle.

### Procédé et dispositif selon l'invention

**Figure 2** illustre un premier mode de réalisation d'un dispositif 100 selon l'invention, qui est maintenant décrit en même temps qu'un procédé selon l'invention.

Le dispositif 100 est prévu pour faire afficher par un client distant 4 des données d'affichage client générées à partir de données d'affichage produites par une machine virtuelle 3 associée audit client distant, comportant :
- au niveau de la machine virtuelle, un module 200 comprenant :
   ∘ un module de communication 202 avec la machine virtuelle 3 permettant de recevoir des données d'affichage produites par la machine virtuelle 3,
   ∘ un module de traitement d'image 204,
   ∘ un module de traitement de données 206,
   ∘ un module de transmission 208 configuré pour transmettre des données de sessions comportant les données d'affichage dynamique et les données de commande d'affichage,
- au niveau du client distant, un module 300 comprenant :
   ∘ un module de réception 302,
   ∘ un module de traitement 304,
   ∘ un module de traitement d'image 306,
   ∘ un module d'envoi de données 308 pour envoyer des données à afficher par le client distant 4.

Le module 204 est configuré pour détecter des données d'affichage statique au sein des données d'affichage produites par ladite machine virtuelle, et générer des données d'affichage dynamique à partir des données d'affichage par suppression des données d'affichage statique.

Le module de traitement de données 206 est configuré pour générer des données de commande d'affichage à partir des données d'affichage statique détectées. Les données de commande d'affichage peuvent, par exemple, comporter les données d'affichage statique et une période d'affichage pendant laquelle les données d'affichage statique doivent être affichées. D'autres solutions techniques comportant une description des données d'affichage statique sous forme de primitives de dessin sont possibles, ladite description étant encore associée à une période d'affichage. Il n'y ainsi pas besoin d'encoder à chaque instant d'encodage les données statiques, mais seulement de transmettre une fois, pour une période déterminée, les données d'affichage statique et une période d'affichage. Les données d'affichages statiques peuvent être décrites par tout moyen connu de l'homme de l'art. La période d'affichage peut être déterminée à partir d'une durée d'affichage, ou encore d'un nombre de trames d'affiche ou encore d'un instant de début d'affichage et d'un instant de fin d'affichage. Encore d'autres descriptions de période d'affichage peuvent être mises en œuvre par l'homme de métier.

Le module de transmission 208 est configuré pour transmettre des données de sessions comportant les données d'affichage dynamique et les données de commande d'affichage.

Le module de réception 302 est configuré pour recevoir les données de sessions transmises.

Le module de traitement 304 est configuré pour générer des données d'affichage client statique à partir des données de commande d'affichage présentes dans les données de session reçues.

Le module de traitement d'image 306 est configuré pour générer lesdites données d'affichage client pour affichage par le client à partir des données d'affichage dynamique présentes dans les données de session reçues et des données d'affichage client statique.

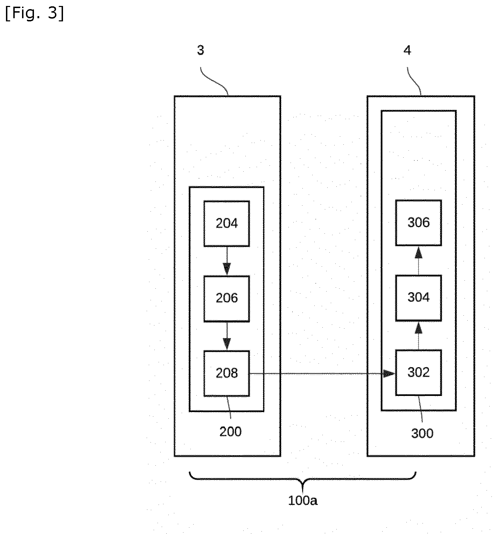

Dans le système 100a, représenté sur **Figure 3****,** le module 100 est intégré dans la machine virtuelle 3, et le module 300 est intégré dans le client 4.

Dans ce mode de réalisation, le module 100 ne comprend pas de module de communication avec la machine virtuelle 3 puisqu'il est intégré dans machine virtuelle 3 et le module 300 ne comprend pas de module de communication avec le client 4 puisqu'il est intégré dans le client 4.

Dans ces différents modes de réalisation, chaque module du dispositif selon l'invention peut être un module logiciel ou un module électronique utilisant des moyens de calcul tels qu'un calculateur ou un processeur, déjà présent sur l'appareil esclave ou l'appareil maître.

De plus, les modules d'envoi et de réception de données, pris seuls, peuvent être des modules existants au sein de l'appareil esclave ou l'appareil maître et qui sont agencés pour réaliser les opérations désirées.

Bien entendu l'invention n'est pas limitée au mode de mise en œuvre décrit et on peut y apporter des variantes de réalisation sans sortir du cadre de l'invention tel que défini par les revendications.

## Revendications

1. Procédé pour faire afficher par un client (4, 4') des données d'affichage client générées à partir de données d'affichage produites par une machine virtuelle (3) distante du client et associée au client s'exécutant sur un ordinateur hôte (1), comportant les étapes suivantes :
- au niveau de la machine virtuelle :
i. détection par un module de traitement d'image (204) de données d'affichage statique au sein des données d'affichage, et génération de données d'affichage dynamique à partir des données d'affichage par suppression des données d'affichage statique,
ii. génération par un module de traitement de données (206) de données de commande d'affichage à partir des données d'affichage statique détectées, et
iii. transmission par un module de transmission (208) de données de sessions comportant les données d'affichage dynamique et les données de commande d'affichage,
- au niveau du client distant :
i. réception par un module de réception (302) des données de sessions transmises,
ii. génération par un module de traitement (304) de données d'affichage client statique à partir des données de commande d'affichage présentes dans les données de session reçues,
iii. génération par un module de traitement d'image (306) des données d'affichage client à partir des données d'affichage dynamique présentes dans les données de session reçues et des données d'affichage client statique.

2. Procédé selon la revendication précédente, dans lequel le traitement des données présentes dans les données de session reçues commande l'affichage d'images enregistrées dans une unité de stockage du client distant (4).

3. Dispositif (100) pour faire afficher par un client distant (4, 4') des données d'affichage client générées à partir de données d'affichage produites par une machine virtuelle (3) associée audit client distant prévue pour être exécutée sur un ordinateur hôte (1), comportant :
- au niveau de la machine virtuelle :
i. un module de traitement d'image (204) configuré pour détecter des données d'affichage statique au sein des données d'affichage produites par ladite machine virtuelle, et générer des données d'affichage dynamique à partir des données d'affichage par suppression des données d'affichage statique,
ii. un module de traitement de données (206) configuré pour générer des données de commande d'affichage à partir des données d'affichage statique détectées, et
iii. un module de transmission (208) configuré pour transmettre des données de sessions comportant les données d'affichage dynamique et les données de commande d'affichage,
- au niveau du client distant :
i. un module de réception (302) configuré pour recevoir les données de sessions transmises,
ii. un module de traitement (304) configuré pour générer des données d'affichage client statique à partir des données de commande d'affichage présentes dans les données de session reçues,
iii. un module de traitement d'image (306) configuré pour générer lesdites données d'affichage client pour affichage par le client à partir des données d'affichage dynamique présentes dans les données de session reçues et des données d'affichage client statique.

4. Programme d'ordinateur contenant des instructions aptes à la mise en œuvre des étapes du procédé selon la revendication 1, lorsque le procédé est exécuté sur une machine virtuelle (3).
